# EUROPÄISCHE PATENTSCHRIFT

(11) **EP 1 194 011 B1**
(45) Veröffentlichungstag und Bekanntmachung des Hinweises auf die Patenterteilung: **10.09.2008**
(21) Anmeldenummer: 01122762.6
(22) Anmeldetag: 21.09.2001
(51) Int. Cl.: H02M 7/5387, H05B 6/04, H05B 6/06, H05B 6/44

(54) **Umrichterschaltung und Verfahren zum Betrieb einer solchen**
Inverter circuit and its method of controlling
Circuit convertisseur et son procédé de commande

(30) Priorität: 29.09.2000 ES 200002440
(43) Veröffentlichungstag der Anmeldung: 03.04.2002
(73) Patentinhaber: BSH Bosch und Siemens Hausgeräte GmbH, 81739 München (DE)
(72) Erfinder: Garcia Jimènez, José Ramon, 50009 Zaragoza (ES); Monterde Aznar, Fernando, 50013 Zaragoza (ES); Hernandez Blasco, Pablo Jesus, 50017 Zaragoza (ES); Burdio, Jose Miguel, 50005 Zaragoza (ES)
(74) Vertreter: Richter, Harald

(56) Entgegenhaltungen:
- EP-A- 0 844 807
- EP-A- 0 986 287
- WO-A-99/03308
- MONTERDE F ET AL: "Unipolar voltage-cancellation control of resonant inverters for induction cooking appliances" INDUSTRIAL ELECTRONICS SOCIETY, 1998. IECON '98. PROCEEDINGS OF THE 24TH ANNUAL CONFERENCE OF THE IEEE AACHEN, GERMANY 31 AUG.-4 SEPT. 1998, NEW YORK, NY, USA,IEEE, US, Bd. 2, 31. August 1998 (1998-08-31), Seiten 820-824, XP010308092 ISBN: 0-7803-4503-7
- MONTERDE F ET AL: "A new ZVS two-output series-resonant inverter for induction cookers obtained by a synthesis method" POWER ELECTRONICS SPECIALISTS CONFERENCE, 2000. PESC 00. 2000 IEEE 31ST ANNUAL 18-23 JUNE 2000, PISCATAWAY, NJ, USA,IEEE, Bd. 3, 18. Juni 2000 (2000-06-18), Seiten 1375-1380, XP010518960 ISBN: 0-7803-5692-6

## Beschreibung

Die Erfindung betrifft eine Umrichter- bzw. Inverterschaltung, insbesondere für eine Induktionskochstelle, nach dem Oberbegriff des Anspruchs 1.

Kochstellen mit induktiver Heizung, die nachfolgend als Induktionskochstellen bezeichnet werden, werden mit einer in der Kochplatte oder Kochfläche angeordneten Induktionsspule betrieben, die in einem das Kochgut enthaltenden Behälter, der ein ferromagnetisches Material aufweist, Induktionsströme erzeugt. Durch die Wirkung der Induktionsströme und der Ummagnetisierungen in der Wandung des Kochgefäßes wird der Behälter und damit das Kochgut erwärmt. Derartige Kochstellen haben einen wesentlich höheren Wirkungsgrad als andere elektrisch betriebene Kochstellen, bleiben im Betrieb "kalt" und stellen geringere Anforderungen an die Ebenheit des Topfbodens.

Die Energieversorgung von Induktionskochstellen erfolgt in der Regel von einer Stromquelle, die einen Wechselstrom mit einer Amplitude (Spitze-Spitze) von ca. 18 bis 45 A und einer Frequenz zwischen 25 und 40 kHz liefert, und die Leistung einer einzelnen Kochstelle liegt im Bereich zwischen 300 W und 3 kW. Die in den meisten Industrieländern erhältlichen Induktionskochgeräte haben zwischen zwei und vier Induktionskochstellen, die auch mit herkömmlichen Kochstellen kombiniert sein können. Bei modernen Geräten dieser Art umfassen einzelne oder alle Kochstellen zwei konzentrisch zueinander spiralig gewickelte Induktivitäten, von denen die äußere der inneren wahlweise zuschaltbar ist. Die Bereitstellung der vergleichsweise hochfrequenten Betriebsströme erfolgt durch Inverterschaltungen (Umrichter).

Die Technik der Ansteuerung von Induktionskochstellen bzw.-geräten - üblicherweise über Leistungshalbleiterschaltungen - ist wegen der o. g. Vorteile seit längerem Gegenstand intensiver Entwicklungsarbeiten, die insbesondere die Ziele einer weiteren Erhöhung des Wirkungsgrades und einer Senkung des Bauelement- und Schaltungsaufwandes und damit der Gestehungskosten sowie schließlich einer weiteren Erhöhung des Gebrauchswertes für den Nutzer verfolgen.

Unter dem letztgenannten Gesichtspunkt beschreibt die EP 0 286 044 A2 eine Schaltung zur Stromversorgung einer induktiven Kochstelle, die die Umschaltung der Stromquelle auf zwei Kochplatten unter Vermeidung von lästigen Störgeräuschen durch zwei über einen Mikroprozessor gesteuerte Relais realisiert. Die Vermeidung der Umschaltgeräusche wird hier durch die Umschaltung der Kochplatten im Umgebungsbereich des Nulldurchgangs der Netzspannung erreicht, wozu der Mikroprozessor eine entsprechende Information von der Stromquelle erhält.

Die EP 0 583 519 A1 beschreibt ein Induktionskochgerät mit zwei Induktionsspulen, denen gemeinsam ein Halbbrückenumrichter zugeordnet ist, an den sie über ein Relais alternierend anschließbar sind. In der DE 196 54 268 C2 wird eine Weiterentwicklung dieser Anordnung beschrieben mit der eine kompaktere Steuerschaltung bereitgestellt werden soll. Neben den erwähnten Induktionsheizspulen (induktiven Lasten) hat das Kochgerät einen Gleichrichter und eine Umrichterschaltung mit mindestens drei an den Gleichrichter angeschlossenen und in Reihe geschalteten Leistungstransistoren, zu denen jeweils eine Diode antiparallel und ein Hilfsresonanzkondensator parallel geschaltet sind. Weiter hat es in Zuordnung zu jeder Induktionsheizspule jeweils einen Hauptresonanzkondensator sowie Hilfsdioden, die jeweils zwischen einem Eingang eines Hauptresonanzkondensators und einem Gleichrichterausgang liegen, derart, daß beim Betrieb der einen Induktionsheizspule die andere nicht mit Spannung versorgt wird.

In der EP 0 724 379 wird ein Steuergerät für Induktionskochstellen mit mehreren Heizelementen beschrieben, die eine Mehrzahl von parallel zueinander anschließbaren Induktionsspulen aufweisen. Dieses Steuergerät hat vier Ausgänge und ermöglicht in differenzierter Weise separate Ansteuerungen sowie Zusammenschaltungen mehrerer Induktionsspulen. Die Umrichterschaltung umfaßt im wesentlichen zwei elektronische HF-Schalter, bis zu vier induktive Lasten, eine Resonanzkreis-Kondensatorbatterie und bis zu vier einpolige Umschalter.

In der EP 0 986 287 A2 werden eine Inverterschaltung mit zwei Ausgängen sowie ein Verfahren zur Steuerung der in deren Ausgänge eingespeisten Leistung beschrieben, mit denen wahlweise eine Last oder zwei Lasten gleichzeitig (insbesondere Induktionsheizspulen von induktiven Kochstellen) versorgt werden sollen. Mit der dort vorgeschlagenen Umrichterschaltung und dem zugehörigen Steuerverfahren sollen die Dimensionierung der Umschalter und Leistungs-Halbleiterbauelemente sowie die Steuerung der Leistungsversorgung der Induktionsspulen optimiert und die Geräuschentwicklung minimiert werden. Der dort vorgeschlagene Inverter ist vom unsymmetrischen, dreiphasigen H-Brückentyp mit einem gemeinsamen Zweig und zwei voneinander unabhängigen Zweigen, die Leistungsbauelemente umfassen. Er hat zwei die Topologie verändernde Umschalter zur wahlweisen Steuerung einer der beiden Induktionsspulen oder beider gleichzeitig. Zwischen jeder Spule und dem gemeinsamen Zweig sind in Serienschaltung Kondensatoren zur Reduzierung des mittleren Stromflusses durch die Leistungs-Halbleiterbauelemente (Transistoren) vorgesehen.

Aus der EP 0 971 562 A1 ist eine Mehrspulenanordnung für Induktionskochstellen bekannt, die die Herstellung von Kochgeräten für den Heimgebrauch und den professionellen Einsatz mit identischen Induktionsspulen und Umrichter- bzw. Wandlerschaltungen erlaubt.

Diese Anordnungen haben - neben vielen weiteren Entwicklungsergebnissen - Fortschritte bei der Lösung der oben erwähnten allgemeinen Aufgaben gebracht, jedoch bisher nicht zu einem massenhaften Einsatz von Induktionskochstellen im privaten oder kommerziellen Bereich führen können.

Der Erfindung liegt daher die Aufgabe zugrunde, eine weiter verbesserte Umrichterschaltung der gattungsgemäßen Art anzugeben, mit der der Aufwand zur Realisierung einer flexiblen Steuerung mehrerer Lasten (Kochstellen bzw. Induktionsspulen) weiter verringert und deren Betrieb noch effizienter und nutzerfreundlicher gestaltet werden kann.

Diese Aufgabe wird hinsichtlich ihres Vorrichtungsaspektes durch eine Umrichterschaltung mit den Merkmalen des Anspruchs 1 gelöst.

In ihrem Vorrichtungsaspekt schließt die Erfindung den wesentlichen Gedanken einer partiellen Duplizierung einer herkömmlichen Invertertopologie zur Ausbildung einer Topologie mit mehreren Ausgängen ein. Dupliziert bzw. multipliziert werden hierbei diejenigen Abschnitte der bekannten Topologie, die eine unabhängige Steuerung der Ausgänge ermöglichen. Die Ausführung dieser partiellen Duplizierung erfordert die Identifizierung der zur Steuerung des Ausgangs notwendigen Abschnitte der ursprünglichen Topologie. Die durch dieses Vorgehen geschaffene Topologie kann durch Einführung zusätzlicher Umschalter (Kommutatoren) optimiert werden, durch die inaktive Ausgänge wahlweise zur Speisung aktiver Ausgänge umkonfiguriert werden können. Dies ermöglicht eine Erhöhung des Umrichtungs- bzw. Konversions-Wirkungsgrades und eine (weitere) Reduzierung der Betriebstemperatur der Leistungsbauelemente im Sinne der oben genannten Aufgabe.

Die Erfindung schließt desweiteren den Gedanken der Benutzung und Modifikation einer Umrichterstruktur vom Brücken- bzw. Halbbrückentyp zur Bildung einer Umrichtertopologie mit mehreren Ausgängen ein. Sind alle Schalter der Brücken-Topologie zur Steuerung des Ausgangs erforderlich, gibt es keinen durch eine Topologie mit mehreren Ausgängen gemeinsam zu nutzenden Abschnitt, d. h. für die Topologie mit mehreren Ausgängen führt das Prinzip der partiellen Duplizierung zu einer Duplizierung (bzw. Multiplizierung) der Anzahl der Konfigurationsumschalter bzw. Kommutatoren.

Die wesentlichen Entwurfsprinzipien der Erfindung ermöglichen eine vorteilhafte Steuerung nicht nur von Induktionskochgeräten, sondern auch von anderen elektrischen Geräten, bei denen Inverterschaltungen mit mehreren Ausgängen eingesetzt werden könnenbeispielsweise von Elektromotoren mit mehreren Wicklungen bzw. Haupt- und Hilfswicklungen, Transformatoranordnungen mit mehreren Wicklungen und/oder Haupt- und Hilfswicklungen sowie Beleuchtungsanordnungen.

Unter dem Blickwinkel eines Betriebsverfahrens schließt die Erfindung den Gedanken ein, eine Steuerstrategie mit gleicher Frequenz für alle Ausgänge des Umrichters vorzusehen. Eine geeignete Steuerstrategie soll eine Reduzierung der Verluste über den gesamten Leistungsbereich und damit der Anforderungen an die Kühlung und/oder die Bauelementespezifikationen unter Beibehaltung der in der vorgeschlagenen Konfiguration liegenden Vorteile erbringen. Diese - weiter unten genauer erläuterte - Strategie kann als einpolige Spannungsunterdrückung bzw. -aufhebung bezeichnet werden.

Die vorgeschlagene und beanspruchte Umrichterschaltung geht aus von einer Serienresonanz-Brückenschaltung mit zwei unabhängigen Ausgängen, wie sie in der EP 0 986 287 A2 in ähnlicher Form beschrieben ist. Hier ist jedem Ausgang zur Verbindung mit einer (induktiven) Last eine Serienkapazität zugeordnet. In den Brückenzweigen sind jeweils elektronische Hochfrequenzschalter angeordnet, welche kostenaufwendige Leistungs-Halbleiterbauelemente umfassen.

Mit der Erfindung wird erreicht, daß eine Lastanordnung mit zwei oder mehr unabhängig ansteuerbaren (Haupt-)Lasten und diesen jeweils zugeordneten Zusatzlasten ohne zusätzlichen Aufwand an derartigen elektronischen Bauelementen und damit außerordentlich kostengünstig realisiert werden kann. Dazu trägt auch bei, daß keine zusätzliche Steuerungs-Hardware benötigt wird. Kostenerhöhungen ergeben sich allein aus den Zusatzlasten bzw. Hilfs-Induktivitäten selbst sowie je einem elektromechanischen Relais von einem Standardtyp und einem kleinen Kondensator pro Zusatzlast.

Ein speziell für Induktionskochgeräte wichtiger Spezialfall der erfindungsgemäßen Umrichterschaltung ist eine solche mit zwei Ausgängen, die über zwei einpolige Umschalter wahlweise mit einem von zwei elektronischen Hochfrequenzschaltern oder beiden Hochfrequenzschaltern verbindbar sind. Da Induktionskochgeräte üblicherweise mit zwei oder vier induktiven Kochstellen ausgestattet sind, ermöglichen eine oder zwei solche Umrichterschaltungen(en) die Speisung eines Induktionskochgerätes mit dem benötigen hochfrequenten Wechselstrom.

Die Hochfrequenzschalter weisen - in an sich bekannter Weise - jeweils eine Parallelschaltung aus einem Leistungstransistor und einer Diode auf, und die Umschalter können in bewährter Weise als elektromechanische Relais ausgebildet sein. Weiterhin hat die Schaltung ein induktives und ein kapazitives Eingangsfilter. Mit dieser bewährten Bauelementkonstellation erreicht die Umrichterschaltung eine hohe Zuverlässigkeit und Lebensdauer bei günstigen Herstellungskosten.

In der seitens der Anmelderin derzeit bevorzugten Anwendung wird die Umrichterschaltung in einem Induktionskochgerät mit mindestens zwei unabhängig steuerbaren Haupt-Induktionsspulen als Lasten sowie je einer diesen zugeordneten Hilfs-Induktionsspulen als Zusatzlasten eingesetzt. Mit der Erfindung können natürlich aber auch Induktionskochgeräte mit vier induktiven Kochstellen realisiert werden, von denen zwei oder auch alle vier zusätzliche Hilfs-Induktivitäten aufweisen. Hierbei sind die Haupt-Induktionsspulen und Hilfs-Induktionsspulen als zueinander konzentrisch spiralig in einer Ebene gewickelte Leiter ausgebildet. Speziell sind die Hilfs-Induktionsspulen für im wesentlichen die halbe Leistungsaufnahme wie die Haupt-Induktionsspulen ausgelegt.

Neben den oben erwähnten allgemeinen Vorteilen der vorgeschlagenen Umrichterschaltung ergeben sich hier weitere, spezielle Vorteile: Speziell bei der Ausführung mit konzentrisch angeordneten Haupt- und Hilfsinduktionsspulen läßt sich bei geeigneter Auswahl der Induktionsspulenflächen eine Minimierung der Nahfeld-Emissionen erreichen; insbesondere können sehr kleine Kochgeräte ohne übermäßige Nahfeld-Emissionen erhitzt werden. Da die Steuerung der Hilfs-Induktivität an diejenige der Haupt-Induktivität angekoppelt ist, lassen sich in den Bodenflächen unterschiedlicher Kochtöpfe weitgehend gleichmäßige Lejstungsverteilungen erzielen.

Neben diesen bevorzugten Anwendungen ist die Erfindung grundsätzlich auch anwendbar bei Elektromotoren mit zwei oder mehr unabhängig steuerbaren Haupt-Motorwicklungen als Lasten sowie je einer jeder Haupt-Motorwicklung zugeordneten Hilfs-Motorwicklung als Zusatzlast oder auf Transformatoranordnungen mit zwei oder mehr unabhängig steuerbaren Hauptwicklungen als Lasten sowie je einer jeder Hauptwicklung zugeordneten Hilfswicklung als Zusatzlast.

Vorteile und Zweckmäßigkeiten der Erfindung ergeben sich im übrigen aus den abhängigen Ansprüchen sowie der nachfolgenden Beschreibung von Ausführungsbeispielen anhand der Figuren. Von diesen zeigen:
Fig. 1 ein Schaltbild (Prinzipskizze) einer Umrichterschaltung zur Speisung von zwei unabhängig steuerbaren Lasten, denen jeweils eine abhängige Last zugeordnet ist, gemäß einer Ausführungsform der Erfindung,
Fig. 2 eine schematische Darstellung (Draufsicht) eines Induktionskochgerätes mit zwei Kochstellen, die jeweils eine Haupt- und eine Hilfs-Induktionsspule umfassen,
Fig. 3 (Tab. 1) eine tabellarische Zusammenstellung der maximal verfügbaren Leistungen an den einzelnen Induktionsspulen des Induktionskochgerätes nach Fig. 2 bei den möglichen Umschalter-Schaltzuständen der Umrichterschaltung,
Fig. 4 Spannungs- und Stromstärke-Kurvenformen über einer RLC-Last gemäß einer neuen Steuerstrategie,
Fig. 5 die Aktivierungssignale für elektronische HF-Schalter sowie die Spannungs- und Strom-Kurvenformen über den Lasten bei einer gemäß der Strategie nach Fig. 4 gesteuerten Zwei-Ausgangs-Brücken-Topologie und
Fig. 6 ein an Fig. 5 angelehntes Timingdiagramm der Ansteuersignale für eine Umrichterschaltung zur Steuerung von zwei Lasten über vier elektronische Schalter sowie die zugehörigen Spannungs- und Stromstärke-Kurvenformen.

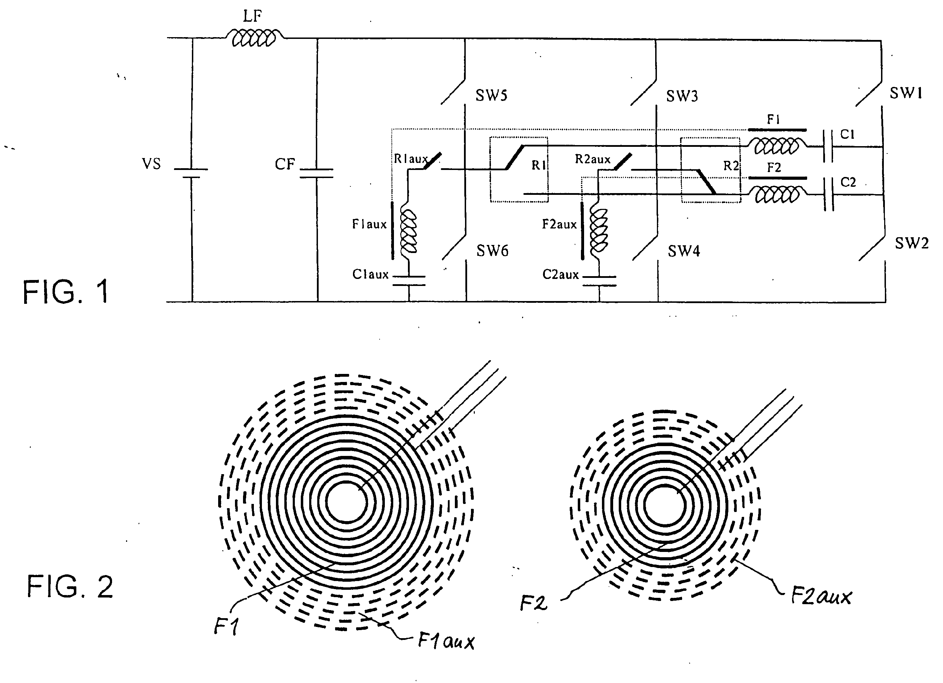

In Fig. 1 ist eine Inverterschaltung zur Stromversorgung von zwei induktiven Kochstellen aus jeweils einer Haupt-Induktionsspule F1, F2 und einer Hilfs-Induktionsspule F1 aux, F2aux gemäß Fig. 2 dargestellt. Die Inverter- bzw. Umrichterschaltung umfaßt eine Gleichspannungsquelle VS, ein induktives Eingangsfilter LF, ein kapazitives Eingangsfilter CF und sechs elektronische HF-Schalter SW1 bis SW6 in einer Brückenschaltung vom H-Typ sowie in Reihe mit jeder der Lasten F1, F2, F1aux und F2aux eine Kondensatorbatterie C1, C2, C1aux bzw. C2aux.

Die Haupt- und Hilfs-Induktivitäten werden über Umschalter (elektromechanische Relais) R1, R2, R1aux bzw. R2aux in der aus der Figur ersichtlichen Weise mit Knotenpunkten zwischen den Schaltern SW3 und SW4 bzw. SW5 und SW6 verbunden. Die von der jeweiligen Induktivität abgewandten Anschlüsse der Kondensatorbatterien C1, C2, C1aux und C2aux sind mit Knoten zwischen den HF-Schaltern SW1 und SW2 bzw. SW6 und SW4 bzw. SW6 und dem negativen Pol der Spannungsquelle VS verbunden. Insgesamt ist die Inverterschaltung vom dreibeinigen Serienresonanz-Typ und durch die Umschalter derart konfigurierbar, daß die elektronischen HF-Schalter, die für eine inaktive Induktionsspule nicht benötigt werden, zur Speisung einer der aktiven Induktionsspulen beitragen.

Die Schalter SW1, SW2 werden mit einer festen Frequenz alternierend ein- bzw. ausgeschaltet, und die Schalter SW3, SW4, SW5 und SW6 werden mit einem Tastverhältnis ein- und ausgeschaltet, welches proportional zur gewünschten Ausgangsleistung an den Ausgängen (Haupt-Induktionsspulen) F1 und F2 ist. In Abhängigkeit von den Aktivierungszuständen der Umschalter R1, R2 kann die Inverterschaltung beide Lasten (Haupt-Induktionsspulen) oder nur eine von beiden versorgen. Die parallele Verfügbarkeit der HF-Schalter SW3, SW5 und SW4, SW6 erhöht die dem jeweiligen Ausgang zugeführte maximale Leistung und steigert die Energieeffizienz, wodurch die Arbeitstemperatur der HF-Schalter reduziert werden kann, wenn nur einer der Ausgänge (eine der induktiven Kochstellen) benutzt wird.

Auf der Grundlage des Ausgangsstromes der Haupt-Induktionsspule F1 wird über den Aktivierungszustand des Umschalters R1aux entschieden. Wenn festgestellt wird, daß ein hinreichend großes Kochgerät sich auf der Kochstelle befindet, wird R1aux eingeschaltet und hierdurch die Hilfs-Induktionsspule F1aux mit einem Strom versorgt, der dem durch die Haupt-Induktionsspule F1 fließenden Strom proportional ist, da das Tastverhältnis dasselbe ist. Dasselbe gilt für das Zusammenwirken von F2, R2aux und F2aux. Befindet sich ein kleiner Topf auf einer der Kochstellen - etwa F1 -, was wiederum durch Erfassung des dort fließenden Stromes festgestellt wird, wird der zugehörige Haupt-Umschalter (für F1 also R1) ausgeschaltet, und es wird nur die Haupt-Induktionsspule (innere Spule) betrieben.

Die Ausgangsleistungen der Haupt-Induktionsspulen F1, F2 sind beispielsweise 800 W und 1400 W und diejenigen der Hilfs-Induktionsspulen F1aux und F2aux beispielsweise 400 W und 700 W.

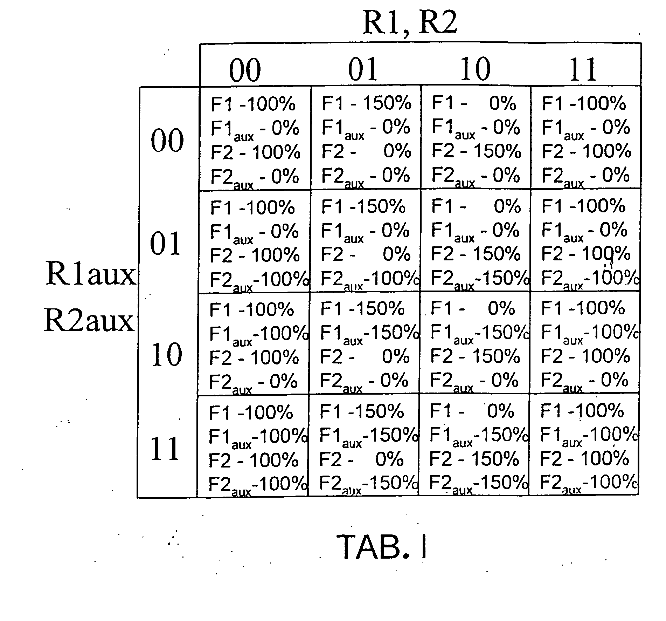

In Fig. 3 (Tab. 1) sind die verfügbaren Maximalleistungen in Abhängigkeit von den Schaltzuständen der Umschalter zusammengestellt.

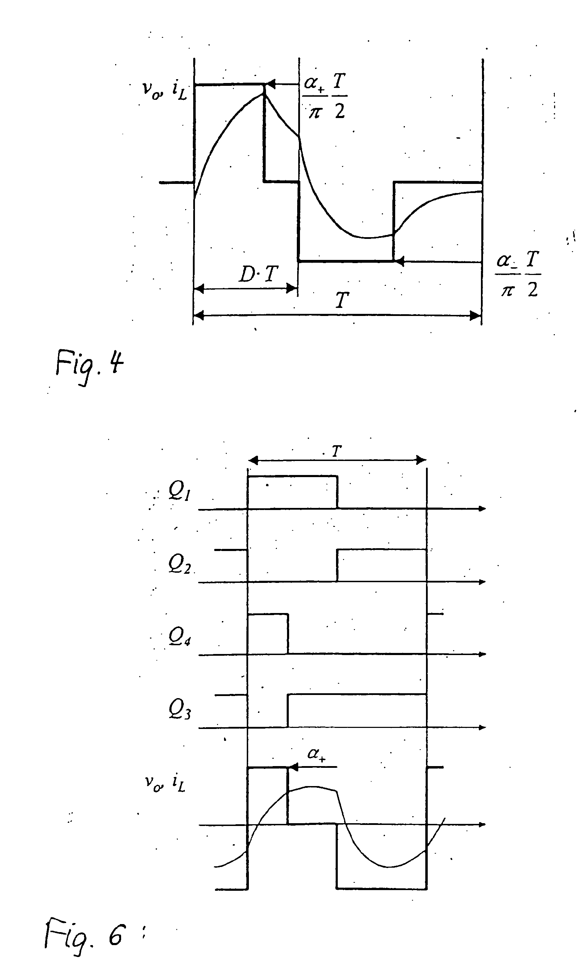

Fig. 4 zeigt die Spannungs-Kurvenform vₒ sowie Stromstärke-Kurvenform i_{L} in Abhängigkeit von der Zeit über einer RLC-Last während eines Schaltzyklus T gemäß einer bevorzugten Steuerstrategie für die vorgeschlagene Umrichterschaltung. Hierin sind D der Dienstzyklus und α₊ der Phasenwinkel in der positiven Halbperiode und α₋ der Phasenwinkel in der negativen Halbperiode.

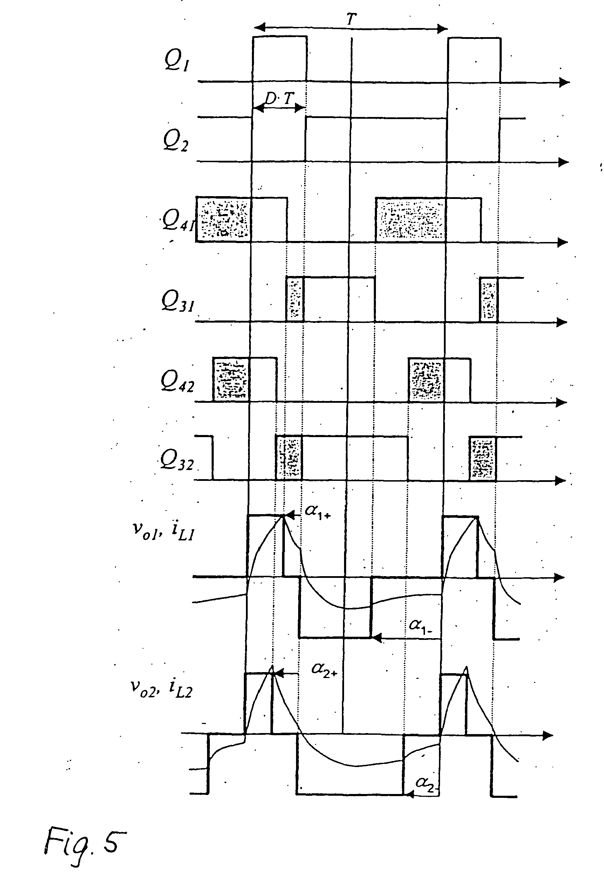

Fig. 5 zeigt in einem entsprechenden Timingdiagramm die Aktivierungssignale für sechs elektronische Schalter (Leistungs-Halbleiterbauelemente) Q₁ bis Q₄₂ einer Zwei-Ausgangs-Brücken-Topologie, die gemäß dieser Steuerstrategie angesteuert wird. Die Spannungen sind mit vₒ₁, vₒ₂ und die Stromstärken über den Lasten mit i_{L1} bzw. i_{L2} bezeichnet, und α₁₊, α₂₊ bezeichnen wieder die Phasenwinkel in der positiven Halbwelle und α₁₋ bzw. α₂₋ die Phasenwinkel in der negativen Halbwelle.

Die schraffierten Bereiche haben dieselbe Bedeutung wie bei der bekannten Phasenverschiebungs-Modulation. Wie auch bei bekannten Steuerstrategien können die Schalteinrichtungen (HF-Schalter) der Topologie vom ZVS- oder ZCS-Schalttyp sein, in Abhängigkeit von den konkreten Werten von D, α₊, α₋, m und Q.

Fig. 6 zeigt in einer an Fig. 5 angelehnten schematischen Darstellung ein Timingdiagramm der Aktivierungssignale für den Spezialfall der sogenannten einpoligen Spannungsaufhebung für den elementaren Fall einer einzelnen Last und von vier Schalteinrichtungen sowie die zugehörige Spannungs- und Stromstärke-Kurvenform.

Die Ausführung der Erfindung ist nicht auf die oben beschriebenen Beispiele und hervorgehobenen Aspekte beschränkt, sondern ebenso in einer Vielzahl von Abwandlungen, sowohl hinsichtlich des Schaltungsaufbaus und des konkreten Einsatzfeldes sowie des Steuerverfahrens, möglich.

## Patentansprüche

1. Umrichterschaltung vom Serienresonanz-Brückentyp mit mindestens zwei unabhängigen Ausgängen zur Verbindung mit je einer Last (F1, F2), denen je eine Serienkapazität zugeordnet ist,
mit einer Gleichspannungsquelle (VS), einer unsymmetrischen Brückenschaltung aus einem gemeinsamen Zweig und voneinander unabhängigen Zweigen, welche jeweils elektronische Hochfrequenzschalter (SW1...SW6) mit Leistungs-Halbleiterbauelementen umfassen, und Umschaltern (R1, R2) zur Veränderung der Topologie zur wählbaren Speisung einer Last an einem ausgewählten Ausgang oder mehrerer Lasten an mehreren Ausgängen,
**gekennzeichnet durch**
je einen jedem unabhängigen Ausgang zugeordneten abhängigen Ausgang zur Verbindung mit einer Zusatzlast (F1aux, F2aux),
je einem jedem abhängigen Ausgang zugeordneten Umschalter (R1aux, R2aux) und je eine jeder Zusatzlast zugeordnete Serienkapazität (C1aux, C2aux).

2. Umrichterschaltung nach Anspruch 1,
**gekennzeichnet durch**
zwei unabhängige und zwei abhängige Ausgänge, denen je ein einpoliger Umschalter (R1, R1aux, R2, R2aux) zugeordnet ist, und sechs elektronische Hochfrequenzschalter (SW1...SW6).

3. Umrichterschaltung nach Anspruch 1 oder 2,
**dadurch gekennzeichnet, daß**
die elektronischen Hochfrequenzschalter (SW1...SW6) jeweils einen Transistor und eine zu diesem antiparallel geschaltete Diode aufweisen und die Umschalter als elektromechanische Relais ausgebildet sind.

4. Induktionskochgerät mit einer Umrichterschaltung nach einem der Ansprüche 1 bis 3 und mindestens zwei unabhängigen steuerbaren Haupt-Induktionsspulen (F1, F2) als Lasten sowie je einer jeder Haupt-Induktionsspule zugeordneten Hilfs-Induktionsspule (F1aux, F2aux) als Zusatzlast.

5. Induktionskochgerät nach Anspruch 4,
**dadurch gekennzeichnet, daß**
die Haupt-Induktionsspulen (F1, F2) und Hilfs-Induktionsspulen (F1aux, F2aux) als zueinander konzentrisch spiralig in einer Ebene gewickelte Leiter ausgebildet sind.

6. Induktionskochgerät nach Anspruch 4 oder 5,
**dadurch gekennzeichnet, daß**
die Hilfs-Induktionsspulen (F1aux, F2aux) für im wesentlichen die halbe Leistungsaufnahme der Haupt-Induktionsspulen (F1, F2) ausgelegt sind.

7. Elektromotor mit einer Umrichterschaltung nach einem der Ansprüche 1 bis 3 und zwei oder mehr unabhängig steuerbaren Haupt-Motorwicklungen als Lasten sowie je einer jeder Haupt-Motorwicklung zugeordneten Hilfs-Motorwicklung als Zusatzlast.

8. Transformatoranordnung mit einer Umrichterschaltung nach einem der Ansprüche 1 bis 3 und zwei oder mehr unabhängig steuerbaren Hauptwicklungen als Lasten sowie je einer jeder Hauptwicklung zugeordneten Hilfswicklung als Zusatzlast.

## Claims

1. Inverter circuit of series resonance bridge type with at least two independent outputs each for connection with a respective load (F1, F2), with each of which a series capacitance is associated, with a direct voltage source (VS), an asymmetrical bridge circuit consisting of a common branch and mutually independent branches, which each comprise electronic high-frequency switch (SW1 ... SW6) with power semiconductor components, and changeover switches (R1, R2) for changing the topology for selectable power supply of a load at a selected output or several loads at several outputs, **characterised by** a respective dependent output, which is associated with each independent output, for connection with an auxiliary load (F1 aux, F2aux), a respective changeover switch (R1aux, R2aux) associated with each dependent output and a respective series capacitance (C1aux, C2aux) associated with each auxiliary load.

2. Inverter circuit according to claim 1, **characterised by** two independent and two dependent outputs, with each of which a respective single-pole changeover switch (R1, R1aux, R2, R2aux) is associated, and six electronic high-frequency switches (SW1 ... SW6).

3. Inverter circuit according to claim 1 or 2, **characterised in that** the electronic high-frequency switches (SW1 ... SW6) each comprise a transistor and a diode connected in antiparallel therewith and the changeover switches are constructed as electromechanical relays.

4. Induction cooking appliance with an inverter circuit according to any one of claims 1 to 3 and at least two independently controllably main induction coils (F1, F2) as loads as well as a respective auxiliary induction coil (F1aux, F2aux), which is associated with each main induction coil, as auxiliary load.

5. Induction cooking appliance according to claim 2, **characterised in that** the main induction coils (F1, F2) and auxiliary induction coils (F1aux, F2aux) are constructed as conductors wound spirally in one plane concentrically with one another.

6. Induction cooking appliance according to claim 4 or 5, **characterised in that** the auxiliary induction coils (F1 aux, F2aux) are designed for substantially half the powered take-up of the main induction coils (F1, F2).

7. Electric motor with an inverter circuit according to any one of claims 1 to 3 and two or more independently controllable main motor windings as loads as well as a respective auxiliary motor winding, which is associated with each main motor winding, as auxiliary load.

8. Transformer arrangement with an inverter circuit according to any one of claims 1 to 3 and two or more independently controllable main windings as loads as well as a respective auxiliary winding, which is associated with each main winding, as auxiliary load.

## Revendications

1. Circuit convertisseur du type de pont de résonance série avec au moins deux sorties indépendantes destinées à être reliées chacune à respectivement une charge (F1, F2) auxquelles est associée respectivement une capacité série, comportant une source de tension continue (VS), un circuit de pont non symétrique composé d'une branche commune et de branches indépendantes les unes des autres, lesquelles comprennent respectivement des interrupteurs électroniques haute fréquence (SW1 ... SW6) avec des composants semi-conducteurs de puissance, et des commutateurs (R1, R2) pour modifier la topologie aux fins de l'alimentation sélectionnable d'une charge sur une sortie sélectionnée ou de plusieurs charges sur plusieurs sorties, **caractérisé par** respectivement une sortie dépendante, associée à chaque sortie indépendante, destinée à être reliée à une charge (F1aux, F2aux), respectivement un commutateur (R1aux, R2aux) associé à chaque sortie dépendante et respectivement une capacité série associée à chaque charge additionnelle (C1aux, C2aux).

2. Circuit convertisseur selon la revendication 1, **caractérisé par** deux sorties indépendantes et deux sorties dépendantes, auxquelles est respectivement associé un commutateur unipolaire (R1, R1aux, R2, R2aux), et six interrupteurs électroniques haute fréquence (SW1 ... SW6).

3. Circuit convertisseur selon la revendication 1 ou 2, **caractérisé en ce que** les interrupteurs électroniques haute fréquence (SW1 ... SW6) comportent chacun un transistor et une diode montée en anti-parallèle avec celui-ci et les commutateurs se présentent sous la forme de relais électromécaniques.

4. Appareil de cuisson à induction comportant un circuit convertisseur selon l'une des revendications 1 à 3 et au moins deux bobines d'induction principales (F1, F2) indépendantes commandables en tant que charges ainsi que respectivement une bobine d'induction auxiliaire (F1aux, F2aux) associée à chaque bobine d'induction principale en tant que charge additionnelle.

5. Appareil de cuisson à induction selon la revendication 4, **caractérisé en ce que** les bobines d'induction principales (F1, F2) et les bobines d'induction auxiliaires (F1aux, F2aux) se présentent sous la forme de conducteurs enroulés concentriquement les uns par rapport aux autres, en spirale dans un plan.

6. Appareil de cuisson à induction selon la revendication 4 ou 5, **caractérisé en ce que** les bobines d'induction auxiliaires (F1aux, F2aux) sont conçues pour sensiblement la demi-consommation de puissance des bobines d'induction principales (F1, F2).

7. Moteur électrique comportant un circuit convertisseur selon l'une des revendications 1 à 3 et deux enroulements de moteur principaux, ou plus, commandables indépendamment en tant que charges ainsi que respectivement un enroulement de moteur auxiliaire associé à chaque enroulement de moteur principal en tant que charge additionnelle.

8. Dispositif transformateur comportant un circuit convertisseur selon l'une des revendications 1 à 3 et deux enroulements principaux, ou plus, commandables indépendamment en tant que charges ainsi que respectivement un enroulement auxiliaire associé à chaque enroulement principal en tant que charge additionnelle.
